# EUROPEAN PATENT APPLICATION

(11) **EP 1 164 409 A1**
(43) Date of publication of application: **19.12.2001**
(21) Application number: 01114364.1
(22) Date of filing: 13.06.2001
(51) Int. Cl.: G02B 27/10, H04N 9/31

(54) **Prism optical system for reflection type projector**

(30) Priority: 14.06.2000 JP 2000177694
(71) Applicant: Fuji Photo Optical Co., Ltd., Saitama-shi, Saitama, 330-8624 (JP); VICTOR COMPANY OF JAPAN, LIMITED, Yokohama-shi, Kanagawa-ken, 221-8528 (JP)
(72) Inventor: Monma, Kouichirou, Saitama-shi, Saitama, 330-8624 (JP); Ozawa, Naoki, Saitama-shi, Saitama, 330-8624 (JP); Yasuda, Kenji, Saitama-shi, Saitama, 330-8624 (JP); Naito, Shunichi, Saitama-shi, Saitama, 330-8624 (JP); Moriya, Satoru, Noda-shi, Chiba-ken, 278-0037 (JP); Kojima, Yoshio, Kawasaki-shi, Kanagawa-ken, 211-0956 (JP); Yamada, Kazuhiro, Kawasaki-shi, Kanagawa-ken, 211-0956 (JP)
(74) Representative: Prechtel, Jörg, Dipl.-Phys. Dr.

(57) **Abstract**

In a prism optical system for a reflection type projector, individual color light components are separated and combined by three prisms. A polarizing beam splitter and the first prism, the first and second prisms, and the second and third prisms are bonded to each other at their opposing faces with no air gap therebetween. The individual color light components separated by respective dichroic films provided between the first and second prisms and between the second and third prisms are directly guided to their corresponding liquid crystal display panels without being reflected by the side wall portions of prisms.

## Description

### BACKGROUND OF THE INVENTION

### Field of the Invention

The present invention relates to a prism optical system for a reflection type projector, which is used in a reflection type liquid crystal projector and the like; and, in particular, to a prism optical system for a reflection type projector, which uses a Philips prism for separating and combining color light components.

### Description of the Prior Art

Widely known as a liquid crystal projector for displaying color images is one emitting three primary color light components of R, G, and B onto three liquid crystal panels so as make them carry the respective image information items of R, G, and B, combining these color light components together, and projecting thus combined light onto a screen.

As liquid crystal panels, those of reflection type have recently become known which can yield an aperture ratio greater than that of transmission types, thereby being able to satisfy the requirement for higher resolution and higher brightness. Known as a small-size, light-weight, inexpensive liquid crystal projector which uses a reflection type liquid crystal panel having such advantages and allows users to do away with convergence adjustment is one employing a reflection type liquid crystal projection optical system disclosed in Japanese Unexamined Patent Publication No. 10-48762.

Since the color light components of R, G, and B after separation irradiate the respective liquid crystal panels by using their corresponding polarizing beam splitters, the projector disclosed in the above-mentioned publication is advantageous in that each polarizing beam splitter may be monochromatic so that the separating performance for reflection/transmission becomes favorable, but may be problematic in that the apparatus becomes larger in size and complicated in structure. There has been an urgent need for solving such a problem of prior art, since projection type display apparatus have strongly been desired to become smaller and compact.

For overcoming such a problem, the technique disclosed in Japanese Patent No. 2505758 is effective. In the prior art disclosed in this publication, as shown in Fig. 2, a so-called Philips prism 11 is used, whereas reflection type liquid crystal display panels 12 to 14 (with reflecting mirrors 15 to 17) are disposed so as to face respective light exit end faces 11b to 11d of individual prisms 11A to 11C. For all the color light components, the light entrance direction from a light source 23 and the light exit direction to a screen 25 can be separated from each other by a single polarizing beam splitter 21. As a consequence, the apparatus can be made compact, and its configuration can be simplified. Here, liquid crystal driving sections 18 to 20 are provided so as to correspond to the liquid crystal panels 12 to 14 for individual color light components, respectively.

In the prior art disclosed in the above-mentioned publication, however, an air gap 11e is provided between the first and second prisms 11A, 11B of the Philips prism 11, and an air gap is also provided between the polarizing beam splitter 21 and the first prism 11A, whereby the luminous flux advancing through the second prism 11B is totally reflected by its surface adjacent the air gap 11e whereas the luminous flux advancing through the first prism 11A is totally reflected by its surface facing the splitter 21. Therefore, the light set to become linearly polarized light rotates its plane of polarization (becomes elliptically polarized) when reflected by the total reflection surfaces.

Since the liquid crystal projector performs ON (whitening)/OFF (blackening) of light by controlling the output from individual prisms 11A∼11C of linearly polarized light, it is quite important to maintain the linear polarization property of illumination light, input to the liquid crystal display panels 12 to 14 and image light, output from the liquid crystal display panels 12 to 14. Since the linear polarization property is likely to be lost within the prism in the prior art as mentioned above whereas its structure is such that analyzers and the like for correction cannot be put into optical paths, components of light leaking out when the light is turned off in particular may increase so much that the contrast lowers.

Also, assembling prisms with the above-mentioned air gaps set at predetermined intervals complicates the manufacturing process, thereby making it hard to restrain the manufacturing cost from rising.

### SUMMARY OF THE INVENTION

In view of the circumstances mentioned above, it is an object of the present invention to provide a prism optical system for a reflection type projector with a low assembling cost, which prevents polarized light from greatly rotating its plane of vibration while being guided to and transmitted through a color separating/combining prism in a projection optical system using a reflection type light valve, whereby the contrast can be kept from lowering.

The present invention provides a prism optical system for a reflection type projector in which incident light is separated into individual color light components by a dichroic film, the individual color light components are optically modulated by predetermined reflection type light valves corresponding thereto, and thus optically modulated individual color light components are combined together by the dichroic film;
wherein the individual color light components are separated and combined by three prisms, first and second prisms in the three prisms being bonded together by way of a first dichroic film, the second and third prisms being bonded together by way of a second dichroic film;
wherein a first light component reflected by the first dichroic film, a second light component transmitted through the first dichroic film and reflected by the second dichroic film, and a third light component transmitted through the first and second dichroic films are directly guided to respective faces of the first to third prisms opposing the light valves without being reflected by side wall portions; and
wherein the individual color light components optically modulated by the predetermined reflection type light valves corresponding thereto and made incident again on the first to third prisms corresponding thereto travel back respective optical paths taken when entering the reflection type light valves.

Preferably, a beam splitter prism is disposed so as to be bonded to the first prism on a light source side such that incident light from the light source and light emitted to a screen are separated from each other at a beam splitter surface of the beam splitter prism.

In this case, the beam splitter prism is preferably a polarizing beam splitter having a substantially rectangular cross section.

The polarizing beam splitter may have a beam splitter surface configured so as to reflect s-polarized light, whereas a polarizing plate for converting the incident light from the light source into s-polarized light may be provided on the light source side of the polarizing beam splitter.

Each of light entrance/exit end faces of the first to third prisms may be provided with an antireflection coat.

Each reflection type light valve may be a reflection type liquid crystal panel.

### BRIEF DESCRIPTION OF THE DRAWINGS

Fig. 1 is a schematic plan view showing the prism optical system for a reflection type projector in accordance with an embodiment of the present invention; and

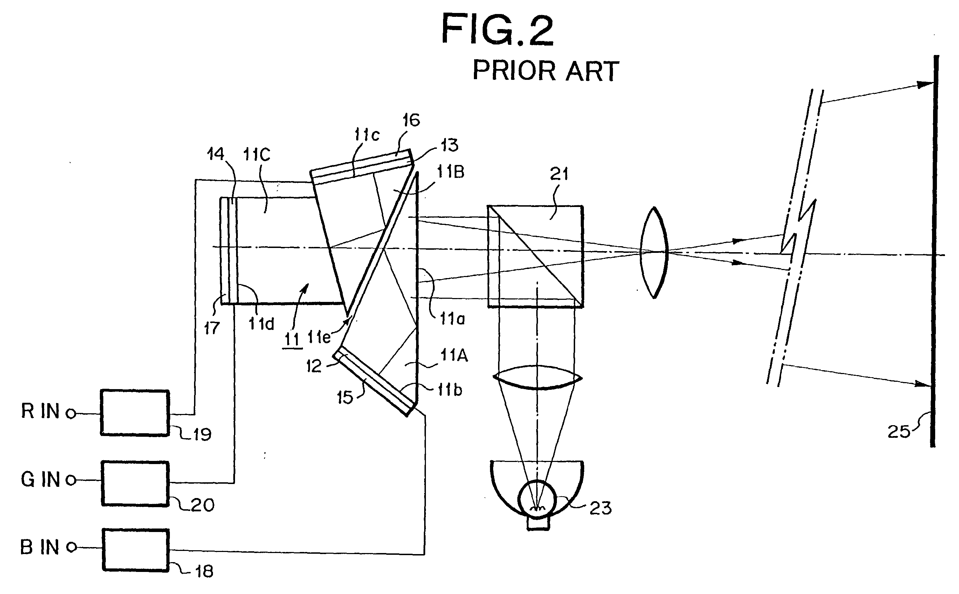

Fig. 2 is a schematic view for explaining prior art.

### DESCRIPTION OF THE PREFERRED EMBODIMENTS

In the following, the prism optical system for a reflection type projector in accordance with an embodiment of the present invention will be explained with reference to a drawing.

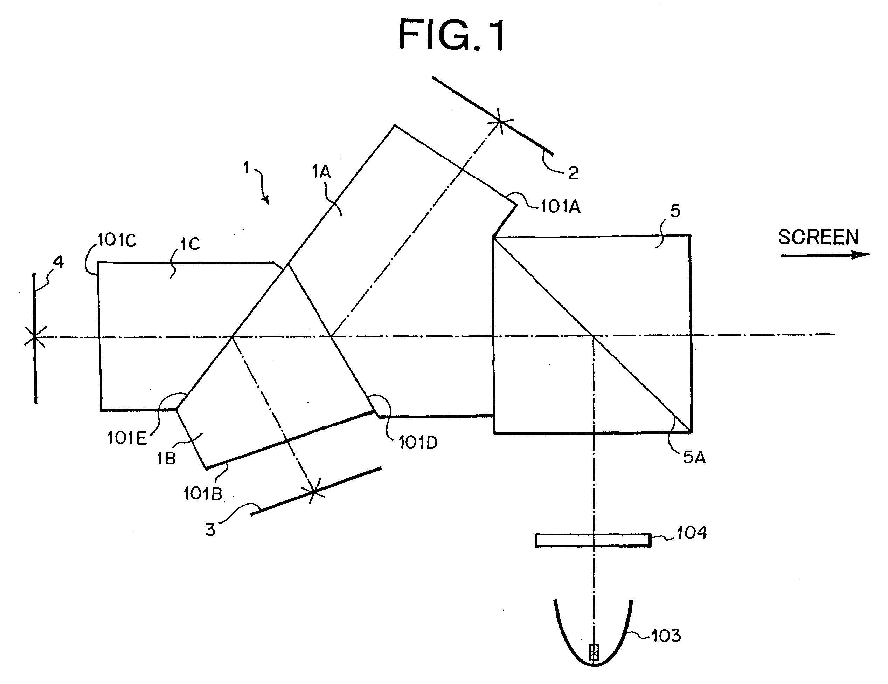

Fig. 1 is a schematic plan view showing the prism optical system for a reflection type projector in accordance with this embodiment.

In Fig. 1, illumination light outputted as nonpolarized white light from a light source 103 is arranged into predetermined s-polarized light by a polarizing plate 104, and this s-polarized light is made incident on a polarizing beam splitter 5. The light source 103 is provided with a reflector for efficiently utilizing light. As the light source 103, a metal halide lamp, a xenon lamp, a tungsten halogen lamp, or the like is used, for example.

Since the illumination light incident on the polarizing beam splitter 5 is s-polarized light, it is reflected by a polarization separating surface 5A and is made incident on a color separating/combining prism 1 bonded to the polarizing beam splitter 5.

The color separating/combining prism 1 is composed of three prisms 1A, 1B, 1C. Namely, the first, second, and third prisms 1A, 1B, 1C are arranged along the optical axis successively from the polarizing beam splitter 5 side. The first and second prisms 1A, 1B are bonded together by way of a first dichroic layer 101D which reflects only green light. The second and third prisms 1B, 1C are bonded together by way of a second dichroic layer 101E which reflects blue light and transmits red light. As a consequence, the luminous flux incident on the color separating/combining prism 1 from the first prism 1A is separated into three primary color components of B, R, G, which are then emitted from respective light entrance/exit end faces 101A, 101B, 101C of the prisms 1A, 1B, 1C corresponding to the individual color light components and irradiate respective reflection type liquid crystal display panels 2, 3, 4 corresponding to the individual color light components. While carrying respective object image information items of individual color light components formed on the liquid crystal display panels 2, 3, 4, the color light components are made incident again on the respective light entrance/exit end faces 101A, 101B, 101C of prisms 1A, 1B, 1C corresponding thereto.

Thereafter, the individual color light components caused to carry the object image information items by the reflection type liquid crystal display panels 2, 3, 4 displaying the respective object images of color light components are guided so as to travel back the respective incident optical paths to the reflection type liquid crystal display panels 2, 3, 4 and are combined together by the color separating/combining prism 1. Thus combined light directly advances through the polarization separating surface 5A of the polarizing beam splitter 5, whereby a desirable color object image is projected under magnification onto a screen by a projection lens which is not depicted.

Since the s-polarized light incident on each of the reflection type liquid crystal display panels 2, 3, 4 is converted into p-polarized light, the return light from each display panel 2, 3, 4 is transmitted through the polarization separating surface 5A of the polarizing beam splitter 5.

In the prism optical system in accordance with this embodiment, the polarizing beam splitter 5 and first prism 1A, the first and second prisms 1A, 1B, and the second and third prisms 1B, 1C are bonded to each other at their opposing faces, whereby no air gap is provided between their opposing faces.

As mentioned above, the light incident on each liquid crystal display panel 2, 3, 4 is s-polarized light, whereas the return light reflected by each liquid crystal display panel 2, 3, 4 is p-polarized light. Each of the s-polarized light and p-polarized light is linearly polarized light. However, since the prisms are bonded together with no air gap therebetween whereas no light is reflected by thus formed boundary surfaces, there is substantially no fear of the linearly polarized light rotating its plane of vibration (becoming elliptically polarized light) while passing through each prism 1A, 1B, 1C unlike the prior art. In a liquid crystal projector carrying out ON (whitening)/OFF (blackening) of light by controlling the output of linearly polarized light, the amount of light component leaking out upon elliptical polarization when the light is turned off becomes problematic in particular. Since the amount of such a light component can be made very small, problems of decreases in contrast and the like generated in the prior art can be prevented from occurring.

When assembling the prisms 1A, 1B, 1C and polarizing beam splitter 5 to each other so as to make the color separating/combining prism 1 as in this embodiment, there is no need to carry out an operation of assembling the individual prisms to each other while securing a minute air gap with a predetermined width, whereby its manufacturing process becomes simpler, and the manufacturing cost can be lowered.

Without being restricted to the above-mentioned embodiment, the prism optical system for a reflection type projector can be modified in various manners. For example, the individual prisms 1A, 1B, 1C and their corresponding liquid crystal display panels 2, 3, 4 may be bonded together. Also, the polarizing beam splitter and the projection lens may be bonded together. Further, the polarizing plate and the polarizing beam splitter may be bonded together.

The prism optical system for a reflection type projector in accordance with the present invention may use a beam splitter (half mirror) having no polarization separating action in place of the polarizing beam splitter.

Also, an air gap can be provided only between the beam splitter and the color separating/combining prism.

Preferably, the light entrance/exit end face of each prism in the color separating/combining prism is provided with an antireflection coat.

Though reflection type liquid crystal display panels are used as reflection type light valves in the above-mentioned embodiment, they are not restrictive, whereby any light valves can be used as long as they can optically modulate predetermined polarized image signals and superpose exit light onto incident light.

In the prism for a reflection type projector in accordance with the present invention, the first and second prisms in three prisms for effecting color separation and combination are bonded together by way of a first dichroic film, whereas the second and third prisms are bonded together by way of a second dichroic film, whereby no air gap exists between the three prisms.

Also, the first light component reflected by the first dichroic film, the second light component transmitted through the first dichroic film and reflected by the second dichroic film, and the third light component transmitted through the first and second dichroic films are directly guided to respective faces of the first to third prisms opposing the light valves without being reflected by the side wall portions of prisms.

While each of the light incident on each light valve and the return light reflected by each light valve is desired to be maintained as linearly polarized light, the color light components are kept from being totally reflected by the side wall portions of prisms while passing through the individual prisms until they are combined together after being separated, whereby there is substantially no fear of the polarized light rotating its plane of vibration. As a consequence, problems of decreases in contrast and the like generated in the prior art can be prevented from occurring.

When assembling the individual prisms to each other so as to make the color separating/combining prism, there is no need to carry out an operation of assembling the prisms to each other while securing a minute air gap with a predetermined width, whereby its manufacturing process becomes simpler, and the manufacturing cost can be lowered.

When a beam splitter prism is disposed on the light source side of first prism so as to be bonded to the first prism, not only the above-mentioned three prisms but also the beam splitter prism can be made integrally, whereby operations and effects mentioned above can become further favorable.

When the luminous flux from the light source is predetermined linearly polarized light whereas the above-mentioned beam splitter prism is a polarizing beam splitter, the incident light and exit light can securely be separated from each other in the polarizing beam splitter, whereby heat is prevented from unnecessarily occurring near a liquid crystal display panel acting as a light valve.

In a prism optical system for a reflection type projector, individual color light components are separated and combined by three prisms. A polarizing beam splitter and the first prism, the first and second prisms, and the second and third prisms are bonded to each other at their opposing faces with no air gap therebetween. The individual color light components separated by respective dichroic films provided between the first and second prisms and between the second and third prisms are directly guided to their corresponding liquid crystal display panels without being reflected by the side wall portions of prisms.

## Claims

1. A prism optical system for a reflection type projector in which incident light is separated into individual color light components by a dichroic film, said individual color light components are optically modulated by predetermined reflection type light valves corresponding thereto, and thus optically modulated individual color light components are combined together by said dichroic film;
wherein said individual color light components are separated and combined by three prisms, first and second prisms in said three prisms being bonded together by way of a first dichroic film, said second and third prisms being bonded together by way of a second dichroic film;
wherein a first light component reflected by said first dichroic film, a second light component transmitted through said first dichroic film and reflected by said second dichroic film, and a third light component transmitted through said first and second dichroic films are directly guided to respective faces of said first to third prisms opposing said light valves; and
wherein said individual color light components optically modulated by said predetermined reflection type light valves corresponding thereto and made incident again on said first to third prisms corresponding thereto travel back respective optical paths taken when entering said reflection type light valves.

2. A prism optical system according to claim 1, wherein a beam splitter prism is disposed so as to be bonded to said first prism on a light source side such that incident light from said light source and light emitted to a screen are separated from each other at a beam splitter surface of said beam splitter prism.

3. A prism optical system according to claim 2, wherein said beam splitter prism is a polarizing beam splitter having a substantially rectangular cross section.

4. A prism optical system according to claim 3, wherein said polarizing beam splitter has a beam splitter surface configured so as to reflect s-polarized light, and wherein a polarizing plate for converting said incident light from said light source into s-polarized light is provided on said light source side of said polarizing beam splitter.

5. A prism optical system according to claim 1, wherein each of light entrance/exit end faces of said first to third prisms is provided with an antireflection coat.

6. A prism optical system according to claim 1, wherein each of said reflection type light valves is a reflection type liquid crystal panel.
